# FASCICULE DE BREVET EUROPEEN

(11) **EP 0 974 133 B1**
(45) Date de publication et mention de la délivrance du brevet: **07.11.2001**
(21) Numéro de dépôt: 97951288.6
(22) Date de dépôt: 10.12.1997
(51) Int. Cl.: G07F 17/32, G07F 7/10

(54) **SYSTEME DE GESTION DE REPARTITION DE LOTS OU DE GAINS AU MOYEN DE CARTES A PUCE**
SYSTEM ZUM MANAGEN DER STATISTISCHEN VERTEILUNG VON LOSEN ODER GEWINNEN MIT HILFE VON CHIPKARTEN
SYSTEM FOR MANAGING THE DISTRIBUTION OF PRIZES AND WINNINGS USING CHIP CARDS

(30) Priorité: 11.12.1996 FR 9615186
(43) Date de publication de la demande: 26.01.2000
(73) Titulaire: GEMPLUS, 13881 Gémenos Cédex (FR)
(72) Inventeur: FOGLINO, Jean-Jacques, F-13790 Peynier (FR)
(86) Numéro de dépôt international: FR9702249
(87) Numéro de publication internationale: WO9826384

(56) Documents cités:
- EP-A- 0 360 613
- EP-A- 0 555 683
- EP-A- 0 691 145
- WO-A-92/10806
- WO-A-94/16416
- WO-A-96/08295
- DE-A- 3 426 431
- DE-U- 9 313 736
- US-A- 5 551 692

## Description

L'invention se rapporte à un système de gestion de répartition de lots ou de gains.

L'invention s'applique à tout centre de gestion de collectivités c'est à dire, à toute entreprise ou à tout centre de prestation de service, désireux d'avoir des moyens de gestion souples et peu couteux pour obtenir une répartition de lots ou de gains sur l'ensemble de la population gérée.

Dans le cas de centres prestataires de services la population gérée est formée par les bénéficiaires desdits services, le terme service devant être interprété de façon large de manière à couvrir les achats de biens ou de tout autre service.

L'invention s'applique donc tout particulièrement à des centres de prestation de service tels que les organismes de vente par correspondance ou de vente directe, les centrales d'achat, les agences de voyages mais aussi à des organismes ou systèmes de jeu offrant un service de jeu soit sur des espaces clos tels que les casinos soit à domicile au moyen de serveurs de jeux.

La présente invention propose de simplifier la gestion d'une répartition de lots ou de gains des centres de gestion de collectivités bénéficiaires de service ou non.

Pour cela, l'invention propose de réaliser cette gestion au moyen de cartes à puces et de lecteurs et de distribuer les moyens de gestion contribuant à cette répartition sur l'ensemble des cartes à puce desdits intervenants ou sur les lecteurs et les cartes à puce.

L'invention s'applique tout particulièrement à des organismes ou systèmes de jeu car chaque type de machine a un comportement différent ce qui rend complexe la gestion par les casinos. L'invention permet en outre d' apporter de nombreux autres avantages énumérés dans la suite.

On pourra se rapporter à l'état de la technique constitué par le document (D1) EP 0 360 613 qui décrit un système de transfert d'informations entre un dispositif portable et une interface intégrée dans une machine de jeux. Dans ce document il est décrit que des moyens sont prévus dans l'interface d'une machine de jeux pour attribuer un bonus à un joueur en fonction du temps passé sur la machine de jeux ou du nombre de parties jouées.

Les machines des casinos sont dans des espaces clos, donc contrôlables. Les joueurs ne peuvent jouer que dans des lieux précis et par conséquent facilement contrôlables humainement.

L'invention permet d'apporter un éclatement géographique de tels espaces de jeu grâce à la carte à puce tout en préservant tous les contrôles habituels.

Il n'est pas possible avec les systèmes de jeu actuels d'avoir un ajustement fin du taux de restitution des gains et cet ajustement nécessite l'intervention humaine auprès de chaque machine de jeu.

La présente invention permet d'avoir un ajustement du taux de restitution des gains aussi fin que désiré simplement en distribuant le nouveau taux sur de nouvelles cartes.

L'invention a donc plus particulièrement pour objet un système de répartition de lots ou de gains, notamment pour centre de gestion de collectivité, comprenant des moyens de gestion pour obtenir une répartition désirée, comprenant :
- une pluralité de cartes à puce (C1,..,Cj) détenues par les membres d'une collectivité sur lesquelles sont stockées des informations d'identification desdits membres,
- une pluralité de lecteurs (L1,...Li) de cartes à puce aptes à lire et écrire des informations sur ledites cartes à puce,
- les moyens de gestion de la répartition désirée étant distribués sur lesdites cartes à puce et/ou sur lesdits lecteurs,
caractérisé en ce que lesdits moyens de gestion comportent des moyens de distribution statistique pour obtenir une répartition statistique de lots ou de gains.

Selon une autre caractéristique de l'invention, les moyens de distribution statistique comprennent pour chaque carte au moins une zone mémoire dans laquelle ont été chargés des paramètres statistiques prédéterminés représentatifs de la répartition statistique désirée.

Les paramètres sont, soit des données résultant d'un calcul statistique préalable, soit des données issues d'un calcul à partir d'une fonction enregistrée sur la carte définissant la répartition statistique désirée, soit une donnée de référence distincte pour chaque carte et une fonction enregistrée sur la carte définissant la répartition statistique désirée.

La fonction enregistrée se présente soit sous la forme d'une table de valeurs, soit selon son expression mathématique y = f(x). Pour la mise en oeuvre de cette fonction, la carte possède une unité de traitement.

Selon un deuxième mode de réalisation, les moyens de distribution statistique sont distribués dans les lecteurs et dans les cartes, les lecteurs comportent alors une mémoire de programme contenant la fonction définissant la répartition statistique désirée et une unité de commande et de traitement permettant de mettre en oeuvre cette fonction à partir de la ou des données enregistrées sur chaque carte.

Le système de répartition statistique selon l'invention s'applique avantageusement à des organismes de jeu dans lequel les membres sont des joueurs.

Dans ce cas, les lecteurs sont des lecteurs-validateurs reliés à des machines de jeu (G) ou à des ordinateurs qui eux mêmes sont reliés à des serveurs de jeu; les programmes d'application sont des programmes de jeu et les moyens de distribution statistique pour obtenir une répartition statistique de lots ou de gains sont des moyens de gestion du taux de restitution des gains obtenus par l'ensemble des mises.

Lorsque les paramètres enregistrés sont des données résultant d'un calcul préalable, ces données correspondent à des valeurs de gain (G1-G10) procurant un taux de restitution de valeur moyenne donnée (To).

Lorsque les paramètres enregistrés sont des données et la fonction définissant la répartition statistique, la donnée (y1, y2) correspond à la valeur de la fonction prise comme valeur moyenne du taux de restitution affectée à un carte, la fonction permettant de calculer les gains à chaque mise pour obtenir un taux de restitution ayant cette valeur moyenne.

L'invention sera mieux comprise à la lecture de la description qui est faite ci-dessous et qui est donnée à titre d'exemple illustratif en regard des figures sur lesquelles :
- la figure 1, représente un système de gestion de répartition de gains ou de lots selon l'invention,
- la figure 2, représente un exemple de fonction de répartition statistique dans le cas d'un système de jeu.

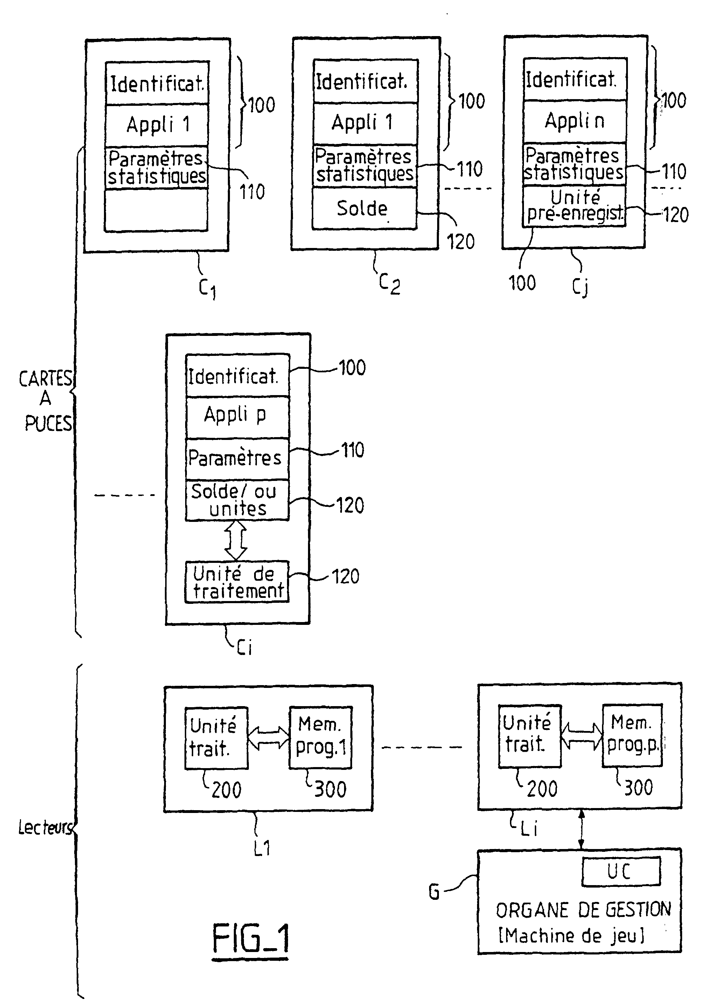

Sur la figure 1 on a représenté une pluralité de cartes à puce C1, C2,...Ci, Cj. Selon les applications les cartes à puce possèdent soit un microprocesseur et des moyens de mémorisation, soit uniquement des moyens de mémorisation. Il s'agit généralement d'une mémoire électriquement programmable de type EEPROM.

Les cartes C1 à Ci représentent des cartes à mémoires et la carte Cj illustre une carte à microprocesseur.

Pour de simples applications d'identification la mémoire 100 comporte uniquement des informations dites d'identification de la carte et du titulaire qui sont contenues dans une zone référencée 100. Cette zone peut également contenir une information d'identification d'une application particulière.

La mémoire peut avoir également une zone 120 prévue dans le cas de carte de paiement pour contenir soit, des unités pré-payées (il s'agit de carte de type porte monnaie électronique), soit une information sur le solde du titulaire.

La mémoire des cartes 100 comporte selon l'invention également une zone 110 dans laquelle sont enregistrés des paramètres de répartition prédéterminés selon l'application. Suivant les applications ces paramètres seront des paramètres statistiques. C'est l'exemple qui va être pris dans la suite de la description.

On a représenté également sur cette figure une pluralité de lecteurs L1,..Li prévus pour lire les informations inscrites sur les cartes et traiter les paramètres statistiques enregistrés.

Ces lecteurs peuvent être selon certaines applications, reliés à un organe de gestion d'information (par exemple un ordinateur) par une liaison série généralement.

Dans le cas où l'invention est appliquée à un système de jeu les lecteurs sont reliés à des machines de jeu.

Chaque lecteur Li comporte une unité de traitement 200 de type microprocesseur et des moyens de mémorisation 300.

Généralement les moyens de mémorisation comportent une mémoire de programme (ROM) pilotant le fonctionnement du lecteur, une mémoire de programme d'application du type électriquement programmable (EEPROM) et une mémoire de travail (RAM).

Ainsi les moyens de gestion de la distribution statistique sont selon un premier mode de réalisation distribués dans les cartes.

Selon un autre mode de réalisation, ces moyens sont distribués dans les cartes et dans les lecteurs de la manière qui va être décrite par la suite.

Les moyens de gestion de la distribution statistique comportent selon le premier mode de réalisation une zone mémoire 110 de la mémoire électriquement programmable de chaque carte. Il s'agit de la zone dans laquelle ont été chargés les paramètres statistiques représentatifs de la répartition désirée.

Suivant les diverses applications de l'invention, les paramètres enregistrés peuvent être formés par des données résultant d'un calcul statistique préalable ou par des données issues d'un calcul à partir d'une fonction enregistrée définissant la répartition statistique désirée ou bien encore par une donnée de référence distincte pour chaque carte et la fonction enregistrée définissant la répartition statistique désirée.

Les fonctions de répartition statistique sont dépendantes des applications.

La redistribution statistique peut par exemple consister à attribuer un lot à une dizaine de bénéficiaires de service pris au hasard parmi l'ensemble des membres bénéficiaires du service pour l'application correspondante prévue dans la carte.

Pour cela, une dizaine de cartes à puce parmi un lot d'un million par exemple comporteront un paramètre pré-enregistré portant cette indication.

Il pourra s'agir d'une donnée lue au bout d'une durée déterminée ou d'une donnée lue lorsqu'un nombre défini de transactions pour cette application a été opéré.

La redistribution statistique peut consister pour un prestataire de service à prévoir de récompenser une dizaine de bons clients se trouvant sur le territoire régional ou national (ou autre) en leur offrant un lot tel qu'un voyage.

Dans ce cas, les paramètres statistiques enregistrés pourront être formés par un programme et des données pré-enregistrées.
- Une première donnée de référence correspond à un seuil.
- Le programme est prévu pour permettre d'enregistrer les montants cumulés des transactions.
- Le programme réalise ensuite une comparaison entre les montants cumulés et le seuil,
- Ce programme réalise également un et logique entre le résultat de la comparaison et une deuxième donnée indiquant le gain d'un lot,
- A l'issue de la comparaison, le résultat indique que le seuil est dépassé ou non,
- Lorsque le seuil est dépassé pour une carte, le programme est prévu pour aller écrire une information soit dans la zone des paramètres, soit dans une autre zone réservée à cet effet, indiquant que le titulaire de la carte a gagné un lot.

Le programme correspondant à cette même application, enregistré dans un lecteur associé viendra lire cette zone par exemple systématiquement.

L'invention s'applique également à un système de transfert entre des cartes à puce et des machines de jeu. Le service correspond alors à une participation à des jeux et les moyens de gestion réalisent une gestion du taux de restitution des gains obtenus par l'ensemble des mises.

Selon cette application, le système comporte une pluralité de machines de jeu destinées à être placées en libre service dans un environnement contrôlé ou non.

Chaque machine est équipée d'un lecteur-validateur Li apte à lire les informations contenues dans la carte et à transmettre des signaux à l'unité de commande UC de la machine pour permettre le jeu. Le lecteur et la carte sont utilisés comme moyen de paiement des parties de jeu engagées par le joueur comme cela est décrit par exemple dans la demande de brevet européen N°93402560.2 publié le 26/04/1995 sous le numéro 0 650 148.

Le taux de restitution des gains correspond généralement à une information qui suit la réglementation du pays.

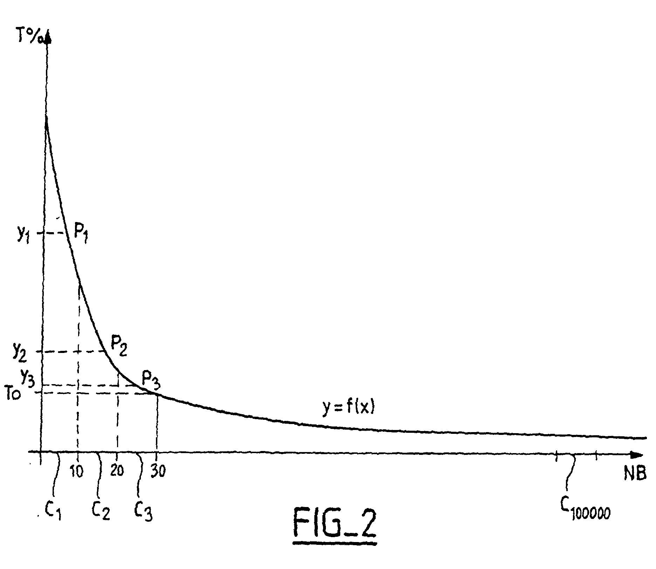

Une répartition statistique du taux de restitution est illustrée par la courbe y=f(x) représentée sur la figure 2.

En abscisse sont portés le nombre de parties jouées NB par l'ensemble de la population de joueurs et en ordonnée, les taux de restitution T%.

Cette courbe permet d'obtenir une valeur moyenne To de restitution (défini par la législation du pays).

Selon un premier mode de réalisation, la distribution des moyens de gestion du taux de restitution des gains est réalisée en enregistrant dans une zone mémoire de chaque carte, par exemple des données G1 ... G10 préalablement calculées à partir de la fonction de distribution désirée. Les cartes seront alors des cartes à mémoire.

Ces données correspondent à des gains dont la valeur moyenne a un taux de restitution égal à To.

A la première mise, le joueur aura un gain G1, à la dixième mise il aura un gain G10.

Selon un deuxième mode de réalisation, la distribution des moyens de gestion de répartition peut être réalisée également par l'enregistrement d'une donnée de référence distincte pour chaque carte et d'un programme de mise en oeuvre de la fonction de y.

La donnée correspond à un point sur la courbe y = f(x) et les cartes sont des cartes à microprocesseur.

Une première carte C1 comporte alors en mémoire la donnée y1 correspondant au point P1 qui est affecté à x premiers coups joués. A titre d'exemple, le nombre de coups prévu pour chaque carte est de 10.

Une deuxième carte comporte la donnée y2 correspondant au point P2 qui est affecté à x autres coups joués, etc...

Le programme de jeu enregistré dans chaque lecteur est prévu pour mettre en oeuvre la fonction et procurer un taux de restitution des gains dont la valeur moyenne correspond à la donnée de référence enregistrée sur la carte, soit y1 pour la carte C1, y2 pour la carte C2.

A titre d'exemple dans le cas où la donnée de référence correspond à un taux de 800%, le joueur qui possèdera la carte sur laquelle est enregistrée cette valeur aura un taux de restitution sur ses mises de valeur moyenne 800%.

Selon une variante de réalisation, les données sont enregistrées dans la carte et la fonction y=f(x) est enregistrée dans le lecteur, le programme de jeu mettant en oeuvre cette fonction étant celui du lecteur.

Bien entendu dans les applications pour lesquelles il est prévu que les cartes mettent en oeuvre un programme exécutant une fonction de répartition, les cartes comportent non seulement la mémoire 100 mais aussi une unité de traitement 120 comprenant un microprocesseur et ledit programme comme l'illustre le schéma de la carte Cj.

Les lecteurs sont équipés d'une mémoire électriquement programmable 300 contenant le ou plusieurs programme(s) d'application et une unité de traitement 200 qui lance l'exécution du programme d'application prévu.

## Revendications

1. Système de répartition de lots ou de gains, notamment pour centre de gestion de collectivité, comprenant des moyens de gestion pour obtenir une répartition désirée, comprenant :
- une pluralité de cartes à puce (C1,..,Cj) détenues par les membres d'une collectivité sur lesquelles sont stockées des informations d'identification desdits membres,
- une pluralité de lecteurs (L1,...Li) de cartes à puce aptes à lire et écrire des informations sur lesdites cartes à puce,
- les moyens de gestion de la répartition désirée étant distribués sur lesdites cartes à puce et/ou sur lesdits lecteurs,
**caractérisé en ce que** lesdits moyens de gestion comportent des moyens de distribution statistique pour obtenir une répartition statistique de lots ou de gains.

2. Système de répartition selon la revendication 1, **caractérisé en ce que** les moyens de distribution statistique comprennent pour chaque carte au moins une zone mémoire (110) dans laquelle ont été chargés des paramètres statistiques prédéterminés représentatifs de la répartition statistique désirée.

3. Système de répartition selon la revendication 2, **caractérisé en ce que** les paramètres sont, soit des données résultant d'un calcul statistique préalable, soit des données issues d'un calcul à partir d'une fonction enregistrée définissant la répartition statistique désirée, soit une donnée de référence distincte pour chaque carte et une fonction enregistrée définissant la répartition statistique désirée.

4. Système de répartition selon la revendication 2, **caractérisé en ce que** dans le cas où une zone mémoire (110) d'une carte comporte la fonction définissant la répartition statistique désirée, cette fonction est enregistrée, soit sous la forme d'une table de valeurs, soit selon son expression mathématique y = f(x).

5. Système de répartition selon la revendication 4, **caractérisé en ce que** dans le cas où la fonction enregistrée est enregistrée selon son expression mathématique, la carte comporte une unité de traitement (120) apte à mettre en oeuvre ladite fonction.

6. Système de répartition selon l'une quelconque des revendications précédentes , **caractérisé en ce que** dans le cas où les moyens de distribution statistique sont distribués dans les lecteurs (Li) et dans les cartes (Ci), les lecteurs comportent une mémoire de programme (300) contenant la fonction définissant la répartition statistique désirée, les lecteurs comportant en outre une unité de commande et de traitement (200) permettant de mettre en oeuvre cette fonction à partir de la ou des données enregistrées sur chaque carte.

7. Système de répartition de lots ou de gains pour organismes de jeu dans lequel les membres sont des joueurs, selon l'une quelconque des revendications précédentes, **caractérisé en ce que** les lecteurs sont des lecteurs-validateurs reliés à des machines de jeu (G) ou à des ordinateurs qui eux mêmes sont reliés à des serveurs de jeu, **en ce que** les programmes d'application sont des programmes de jeu et **en ce que** les moyens de distribution statistique pour obtenir une répartition statistique de lots ou de gains sont des moyens de gestion du taux de restitution des gains obtenus par l'ensemble des mises.

8. Système de répartition selon les revendications 3 et 7, **caractérisé en ce que** lorsque les paramètres enregistrés sont des données résultant d'un calcul préalable, ces données correspondent à des valeurs de gain (G1-G10) procurant un taux de restitution de valeur moyenne donnée (To).

9. Système de répartition selon les revendications 3 et 7, **caractérisé en ce que** lorsque les paramètres enregistrés sont des données et la fonction définissant la répartition statistique, la donnée (y1, y2) correspond à la valeur de la fonction prise comme valeur moyenne du taux de restitution affectée à un carte, la fonction permettant de calculer les gains à chaque mise pour obtenir un taux de restitution ayant cette valeur moyenne.

## Patentansprüche

1. Verteilsystem von Preisen oder Gewinnen, insbesondere für Verwaltungszentren für Gruppen, umfassend Verwaltungsmittel zum Erhalt einer gewünschten Verteilung, umfassend:
- eine Vielzahl von Chipkarten (C1, ..., Cj) im Besitz der Mitglieder einer Gruppe, auf welchen Informationen zur Identifikation besagter Mitglieder gespeichert sind,
- eine Vielzahl Lesegeräte (L1, ..., Li) der Chipkarten, die geeignet sind, die Informationen auf besagten Chipkarten zu lesen und zu schreiben,
- die Verwaltungsmittel für die gewünschte Verteilung, die auf besagten Chipkarten und / oder auf besagten Lesegeräten ausgegeben werden,
**dadurch gekennzeichnet, daß** besagte Verwaltungsmittel statistische Ausgabemittel umfassen, um eine statistische Verteilung der Preise oder Gewinne zu erhalten.

2. Verteilsystem gemäß Anspruch 1, **dadurch gekennzeichnet, daß** die statistischen Ausgabemittel für jede Karte wenigstens eine Speicherzone (110) umfassen, in der vorbestimmte statistische Parameter geladen sind, die die gewünschte statistische Verteilung darstellen.

3. Verteilsystem gemäß Anspruch 2, **dadurch gekennzeichnet, daß** die Parameter entweder Daten sind, die aus einer vorherigen statistischen Berechnung stammen, oder Daten sind, die aus einer Berechnung aus einer gespeicherten Funktion hervorgegangen sind, die die gewünschte statistische Verteilung definiert, das heißt verschiedene Referenzdaten für jede Karte und eine gespeicherte Funktion, die die gewünschte statistische Verteilung definiert.

4. Verteilsystem gemäß Anspruch 2, **dadurch gekennzeichnet, daß** in dem Falle, in dem eine Speicherzone (110) einer Karte die Funktion umfaßt, die die gewünschte statistische Verteilung definiert, diese Funktion entweder in Form einer Wertetabelle oder gemäß ihres mathematischen Ausdrucks y = f(x) gespeichert wird.

5. Verteilsystem gemäß Anspruch 4, **dadurch gekennzeichnet, daß** in dem Fall, in dem die gespeicherte Funktion gemäß ihres mathematischen Ausdrucks gespeichert wird, die Karte einen Programmschritt (120) umfaßt, der geeignet ist, besagte Funktion umzusetzen.

6. Verteilsystem gemäß einem der vorgenannten Ansprüche, **dadurch gekennzeichnet, daß** in dem Fall, in dem die statistischen Ausgabemittel in den Lesegeräten (Li) und in den Karten (Ci) ausgegeben sind, die Lesegeräte einen Programmspeicher (300) umfassen, der die Funktion beinhaltet, die die gewünschte statistische Verteilung definiert, wobei die Lesegeräte darüber hinaus eine Steuereinheit und einen Programmschritt (200) umfassen, die die Umsetzung dieser Funktion ausgehend von den auf jeder Karte gespeicherten Daten erlauben.

7. Verteilsystem von Preisen oder Gewinnen für Spielveranstalter, in dem die Mitglieder Spieler sind, gemäß einem der vorgenannten Ansprüche, **dadurch gekennzeichnet, daß** die Lesegeräte Lese-Bestätigungsgeräte sind, die an Spielmaschinen (G) oder an Computer angeschlossen sind, die ihrerseits an Spielserver angeschlossen sind, daß die Anwendungsprogramme Spielprogramme sind und daß die statistischen Ausgabemittel zum Erhalt einer statistischen Verteilung von Preisen oder Gewinnen Verwaltungsmittel des Rückgabesatzes der Gewinne sind, die aus allen Einsätzen erhalten wurden.

8. Verteilsystem gemäß Anspruch 3 bis 7, **dadurch gekennzeichnet, daß**, wenn die gespeicherten Parameter Daten sind, die aus einer vorherigen Berechnung stammen, diese Daten Gewinnwerten (G1 - G10) entsprechen, die einen Rückgabesatz eines gegebenen Durchschnittswertes (To) liefern.

9. Verteilsystem gemäß Anspruch 3 bis 7, **dadurch gekennzeichnet, daß**, wenn die gespeicherten Parameter Daten und die die statistische Verteilung definierende Funktion sind, die Daten (y1, y2) dem Wert der Funktion entsprechen, die als Durchschnittswert des einer Karte zugeordneten Rückgabesatzes genommen wird, wobei es die Funktion erlaubt, die Gewinne bei jedem Einsatz zu berechnen, um einen Rückgabesatz mit diesem Durchschnittswert zu erhalten.

## Claims

1. A distribution system for distributing prizes or winnings, in particular for a management center of an organization, said system comprising management means for obtaining a desired distribution, said distribution system further comprising:
- a plurality of smart cards (C1, ..., Cj) held by the members of an organization and on which information is stored for identifying said members; and
- a plurality of smart card readers (L1, ..., Li) suitable for reading information from said smart cards and for writing information thereon;
- the management means for managing the desired distribution being distributed over said smart cards and/or over said readers;
said system being **characterized in that** said management means comprise statistical distribution means for obtaining a statistical distribution of prizes or of winnings.

2. A distribution system according to claim 1, **characterized in that** the statistical distribution means comprise, for each card, at least one memory zone (110) in which predetermined statistical parameters representative of the desired statistical distribution have been loaded.

3. A distribution system according to claim 2, **characterized in that** the parameters are constituted either by data resulting from a prior statistical computation, or by data from a computation on the basis of a recorded function defining the desired statistical distribution, or else by reference data that is distinct for each card and by a recorded function defining the desired statistical distribution.

4. A distribution system according to claim 2, **characterized in that**, when a memory zone (110) of a card contains the function defining the desired statistical distribution, said function is recorded either in the form of a table of values, or as its mathematical expression y = f(x).

5. A distribution system according to claim 4, **characterized in that**, when the recorded function is recorded as its mathematical expression, the card has a processing unit (120) suitable for implementing said function.

6. A distribution system according to any preceding claim, **characterized in that**, when the statistical distribution means are distributed in the readers (Li) and in the cards (Ci), each of the readers includes a program memory (300) containing the function defining the desired statistical distribution, each of the readers further including a control and processing unit (200) making it possible to implement said function on the basis of the data recorded on each card.

7. A distribution system for distributing prizes or winnings for games-organizing bodies in which the members are players, according to any preceding claim, **characterized in that** the readers are validating-readers connected to gaming machines (G) or to computers which are themselves connected to gaming servers, **in that** the application programs are games programs, and **in that** the statistical distribution means for obtaining a statistical distribution of prizes or of winnings are means for managing the rate of payout of the winnings obtained by the total stakes placed.

8. A distribution system according to claims 3 and 7, **characterized in that**, when the recorded parameters are constituted by data resulting from a prior computation, the data corresponds to winnings values (G1-G10) procuring a rate of payout of a given mean value (To).

9. A distribution system according to claims 3 and 7, **characterized in that**, when the recorded parameters are constituted by data and the by the function defining the statistical distribution, the data (y1, y2) corresponds to the value of the function that is taken as the mean value for the rate of payout assigned to a card, the function making it possible to compute the winnings each time a stake is placed so as to obtain a rate of payout having said mean value.
